Europäisches Patentamt

European Patent Office

Office européen des brevets

(19)

(11) Numéro de publication : **0 496 652 A1**

## (12) DEMANDE DE BREVET EUROPEEN

(21) Numéro de dépôt : **92400107.6**

(22) Date de dépôt : **15.01.92**

(51) Int. Cl.$^5$ : **G01N 1/12, E21B 49/08**

(30) Priorité : **23.01.91 FR 9100756**

(43) Date de publication de la demande :
**29.07.92 Bulletin 92/31**

(84) Etats contractants désignés :
**DE ES FR GB IT NL**

(71) Demandeur : **Société Française de Stockage Géologique "GEOSTOCK"**
**7, rue E. et A. Peugeot**
**F-92563 Rueil Malmaison Cédex (FR)**

(72) Inventeur : **Cambon, Jean-Luc**
**6, avenue Pastourelle**
**F-78700 Conflans-Ste-Honorine (FR)**
Inventeur : **Boulanger, Alain**
**Le Petit Saint Jean**
**F-04130 Villeneuve (FR)**

(74) Mandataire : **Pinguet, André**
**CAPRI sàrl, 19, rue Erlanger**
**F-75016 Paris (FR)**

(54) **Dispositif et procédé de prélèvement et de conditionnement d'échantillons d'eau souterraine en vue de déterminer notamment la quantité de gaz dissous qu'ils contiennent, utilisation dans le cadre d'une analyse bactérienne.**

(57) Afin de prélever un échantillon d'eau souterraine dans le but notamment de mesurer la quantité de gaz dissous que celle-ci contient à la profondeur de prélèvement, la présente invention propose un système d'ouverture de la bouteille (E) d'échantillonnage à la fois simple, fiable et de faible encombrement pour être mis en oeuvre dans des puits de sondage de quelques pouces de diamètre et atteignant tout au plus 300m de profondeur.

Ce système a recours à une tête (C) de commande, de préférence pneumatique, permettant de contrôler depuis la surface la coïncidence d'un orifice latéral (55) d'un cylindre (5) mobile de la tête (C) avec l'embouchure (75) d'un canal intérieur d'un ensemble piston (7) fixe communiquant avec la bouteille (E). Ainsi peut-on ouvrir et fermer la bouteille (E) à la profondeur de prélèvement si bien que l'échantillon d'eau recueilli demeure pratiquement à tout instant à la pression hydrostatique correspondante. La tête (C) est en outre disposée sous la bouteille (E) afin de piéger tous les gaz dissous en dépit de leur passage transitoire en phase gazeuse au moment de leur entrée dans la bouteille (E). Enfin la conduite (9) d'amenée du fluide actionnant la tête (C) passe au travers de la bouteille (E) de sorte que l'encombrement du dispositif de prélèvement est réduit au minimum.

Ce dispositif est complété par un ensemble de laboratoire pour conditionner ensuite l'échantillon prélevé et le ramener à une pression inférieure. Il peut dès lors servir également à l'analyse de la flore bactérienne. Dans le cadre de celle des gaz dissous toutefois, un procédé avantageux de prélèvement et de conditionnement est par ailleurs exposé.

FIG .1

EP 0 496 652 A1

Jouve, 18, rue Saint-Denis, 75001 PARIS

La présente invention a trait à un dispositif de prélèvement et de conditionnement d'échantillons d'eau souterraine en vue de déterminer notamment la quantité de gaz dissous qu'ils contiennent. Les échantillons ainsi prélevés et conditionnés se prêtent alors à l'analyse de la nature de ces gaz ainsi qu'à celle des sels en solution dans l'eau. La flore bactérienne peut par ailleurs être recueillie à l'aide du présent dispositif dans des conditions de stérilité et de représentativité de son état à la profondeur de prélèvement particulièrement intéressantes. Des procédés mettant en oeuvre ce dispositif à ces fins font également partie de l'invention.

Lors de l'échantillonnage d'une eau souterraine, on se heurte entre autres à une difficulté technique liée à la pression hydrostatique régnant à la profondeur de prélèvement. Cette dernière est en effet égale à plusieurs fois la pression atmosphérique. Or, l'eau souterraine contient des gaz dissous tels que de l'azote, de l'oxygène, du gaz carbonique, de l'hydrogène sulfuré ou encore différents hydrocarbures (méthane, éthane, etc.). Comme la solubilité de ces gaz est dépendante notamment de la pression, on conçoit qu'un échantillon d'eau recueilli à une grande profondeur, puis ramené jusqu'en surface sans précautions particulières subirait des changements de phase susceptibles d'entacher la fiabilité de son analyse ultérieure.

En pratique, on lève ce problème en utilisant une bouteille d'échantillonnage aux parois rigides si bien que le volume de son contenu ne peut varier. On prend en outre garde à remplir la bouteille descendue dans le puits de sondage aussi rapidement que possible. De la sorte en effet, on s'assure que l'eau introduite dans la bouteille demeure pratiquement à tout instant, y compris après sa remontée, à la pression hydrostatique du point de prélèvement. Toutefois, pendant le court laps de temps que dure le remplissage proprement dit de la bouteille, l'eau subit une décompression passagère. Elle a pour effet de provoquer son dégazage. Aussi, pour éviter que ne soient perdus les gaz dissous revenus transitoirement à l'état gazeux, l'entrée de la bouteille est-elle généralement disposée à son extrémité inférieure. Cela contribue en effet au piégeage de ces gaz qui ont tendance à remonter. Au demeurant, ils ne tardent pas à se redissoudre au moins partiellement dans l'eau recueillie dans la bouteille dès le rétablissement de la pression hydrostatique en son sein.

Jusqu'ici, ce principe de prélèvement a essentiellement été mis en oeuvre dans le cadre d'applications pétrolières. Dès lors, les profondeurs concernées sont plutôt de l'ordre de plusieurs milliers de mètres et les pressions de plusieurs dizaines de mégaPascals. Comme par ailleurs les diamètres des puits de sondage (typiquement de 10″, soit 25,4 cm) autorisent l'emploi d'échantillonneurs relativement encombrants, des bouteilles peuvent être descendues vides, puis mises rapidement en communication avec la nappe souterraine au moyen de pastilles explosives, déclenchées par exemple électriquement pour fragiliser une entrée de la bouteille. Ce système n'est toutefois pas adapté lorsque le diamètre du puits est plus réduit, aussi faible que 2″, soit 5 cm environ notamment. Il fait en outre preuve d'une sophistication inutile sitôt que la pression hydrostatique au point de prélèvement est plus faible, par exemple de deux ou trois mégapascals. Cela correspond à des profondeurs de 200 à 300 mètres au maximum. Le champs d'application envisagé ici est en effet davantage celui des reconnaissances hydrauliques accompagnant par exemple des travaux souterrains tels que le creusement de cavités de stockage d'hydrocarbures, mais aussi l'étude des nappes phréatiques pour en déterminer la pollution ou pour vérifier qu'elles constituent une ressource utilisable.

C'est ainsi que la présente invention a pour but un dispositif de prélèvement d'eau souterraine adapté à des puits de sondage de faible diamètre et de degré de sophistication en rapport avec des profondeurs ne dépassant pas 300 m. L'analyse ultérieure des gaz dissous qui est envisagée, conduisant toutefois à retenir une bouteille d'échantillonnage de contenance invariable, cela revient à rechercher un système simple de mise en communication rapide de la bouteille avec la nappe. La structure de l'échantillonneur associé doit alors être d'encombrement réduit. Il convient en outre qu'elle se prête au conditionnement de l'échantillon recueilli en vue de l'étude de ses gaz dissous : mesure de leur quantité et détermination de leur nature essentiellement.

Ce cahier des charges se trouve rempli conformément à la présente invention par un dispositif de prélèvement et de conditionnement d'un échantillon d'eau souterraine en vue de déterminer notamment la quantité de gaz dissous que l'échantillon contient, le dispositif comprenant un échantillonneur pour recueillir l'échantillon dans une bouteille d'échantillonnage de contenance invariable démontable et à la pression hydrostatique du point de prélèvement ainsi qu'un ensemble de laboratoire pour détendre l'échantillon dans un détendeur et isoler dans une ampoule la majeure partie de ses gaz dissous, l'échantillonneur comportant, disposée sous la bouteille, une tête de commande adaptée à contrôler l'entrée de la bouteille sous l'action d'un fluide sous pression, le fluide étant amené depuis la surface tandis qu'une conduite d'amenée du fluide passe au travers de la bouteille.

Et, dans le cadre d'une commande pneumatique, la tête de commande se compose selon une forme de réalisation avantageuse de deux groupes cylindrepiston disposés l'un en dessous de l'autre, un premier groupe cylindre-piston, dit "moteur", ayant un cylindre fixe à l'extrémité inférieure duquel se raccorde la conduite d'amenée du fluide tandis que, de son extrémité supérieure, émerge dans des conditions étanches une tige creuse solidaire d'un piston adapté à circuler dans le cylindre fixe, un second groupe cylindre-piston, dit "valve", ayant un cylindre mobile, solidaire à son extrémité inférieure de la tige creuse émergeant du groupe "moteur", et recevant intérieurement un ensemble piston, l'ensemble piston comprenant une tige creuse qui émerge de l'extrémité supérieure du cylindre mobile pour se raccorder rigidement à la bouteille et communiquer avec elle par un canal intérieur, l'ensemble piston comprenant en outre un piston au sein duquel se prolonge et est dévié le canal intérieur de la tige creuse pour présenter une embouchure latérale, le piston étant adapté à circuler de façon étanche relativement au cylindre mobile à l'encontre de moyens élastiques de rappel entre une position "ouverte" où l'embouchure latérale est en regard d'un orifice du cylindre mobile de sorte que l'entrée de l'eau souterraine dans la bouteille est autorisée, et une position "fermée" où l'embouchure latérale n'est pas en regard de l'orifice de sorte que la bouteille demeure fermée.

Grâce à une telle structure, le présent échantillonneur s'adapte tout d'abord à des puits de sondage de faible diamètre. Toutefois, en pratique, il n'est pas envisagé de descendre à des diamètres plus petits que 2". Comme la conduite d'amenée du fluide passe en effet au travers de la bouteille d'échantillonnage, il suffit que cette dernière présente un diamètre en rapport. Cela ne laisse au demeurant rien préjuger de sa contenance qui peut notamment atteindre 1,5l. Sa longueur n'est certes pas limitée (par exemple de l'ordre d'un mètre). Ensuite, il est clair que la tête de commande essentiellement pneumatique permet de mettre en communication la bouteille avec l'eau souterraine avec un contrôle de l'opération depuis la surface. Le recours aux deux groupes cylindre-piston autorise alors un actionnement de la tête à la fois efficace et rapide. Ce système présente enfin la simplicité technologique voulue.

Le lecteur trouvera d'autres détails sur une structure préférée du présent échantillonneur dans les revendications 4 à 10 jointes en annexe. Quant à l'ensemble de laboratoire, il pourra se reporter aux revendications 11 à 12 pour en lire une forme de réalisation avantageuse.

La présente invention envisage par ailleurs un procédé de prélèvement et de conditionnement d'un échantillon d'eau souterraine en vue de déterminer notamment la quantité de gaz dissous que l'échantillon contient, caractérisé en ce qu'il consiste à mettre en oeuvre un dispositif tel que défini ci-dessus. Une suite préférée d'opérations intervenant dans ce procédé est exposée dans les revendications 13 à 20.

Il convient par ailleurs de remarquer que l'échantillon prélevé grâce au présent échantillonneur, puis détendu à l'aide du présent ensemble de laboratoire, peut immédiatement servir à l'analyse des sels en solution au sein de l'eau souterraine. Comme la bouteille d'échantillonnage n'a été mise en communication avec elle qu'une fois la profondeur souhaitée atteinte, ce genre d'étude livre des indications parfaitement représentatives de la profondeur correspondante.

Cet avantage est encore plus précieux lorsqu'il est question d'examiner la flore bactérienne. La nature de cette dernière est en effet particulièrement tributaire de la profondeur qui conditionne la quantité d'oxygène présente dans l'eau. Ainsi parvient-on par exemple à recueillir la flore anaérobie plus profonde sans qu'il y ait eu contamination préalable du contenu de la bouteille d'échantillonnage par la flore aérobie des nappes supérieures, traversées en premier lieu par le dispositif de prélèvement. Remarquons à cette occasion que l'échantillonneur est avantageusement réalisé dans des matériaux compatibles avec leur stérilisation (à hautes températures notamment) en vue justement de ce dernier type d'analyse. L'ensemble de laboratoire associé se limite alors à un flacon, généralement en verre muni d'un évent pour servir de détendeur. L'utilisation du présent dispositif dans ce dernier cadre, telle qu'elle est explicitée dans les revendications 21 et 22, fait partie en conséquence des aspects de l'invention pour lesquels une protection est également recherchée.

L'invention sera mieux comprise à la lecture de la description détaillée qui va suivre et à l'examen des dessins annexés qui, à titre d'exemple non limitatif, représentent une forme de réalisation du présent dispositif et illustrent un mode de réalisation du présent procédé. Sur ces dessins :

    – la figure 1 est une coupe axiale schématique d'un échantillonneur faisant partie d'un dispositif de prélèvement et de conditionnement conformément à la présente invention ;
    – les figures 2 et 3 sont des agrandissements d'une tête de commande pour l'échantillonneur selon la figure précédente. La tête est montrée dans une position qui garantit la fermeture d'une bouteille d'échantillonnage sur la figure 2 et dans une position correspondant à son ouverture sur la figure 3 ;
    – la figure 4 est une vue schématique d'un ensemble de laboratoire faisant partie d'un dispositif de prélèvement et de conditionnement conformément à la présente invention ;
    – les figures 5 à 10 montrent l'ensemble de la figure précédente à différentes étapes d'un procédé de prélèvement et de conditionnement conformément à la présente invention.

Le présent dispositif de prélèvement et de conditionnement d'échantillons d'eau souterraine se compose à la vérité de plusieurs éléments. Les premiers à être évoqués ici servent au prélèvement proprement dit. Ils forment en association un échantillonneur adapté, selon l'invention, à être descendu dans un puits de sondage de diamètre aussi réduit que 2″ (5 cm environ) et jusqu'à une profondeur sous la surface de la nappe d'à peu près 300 m.

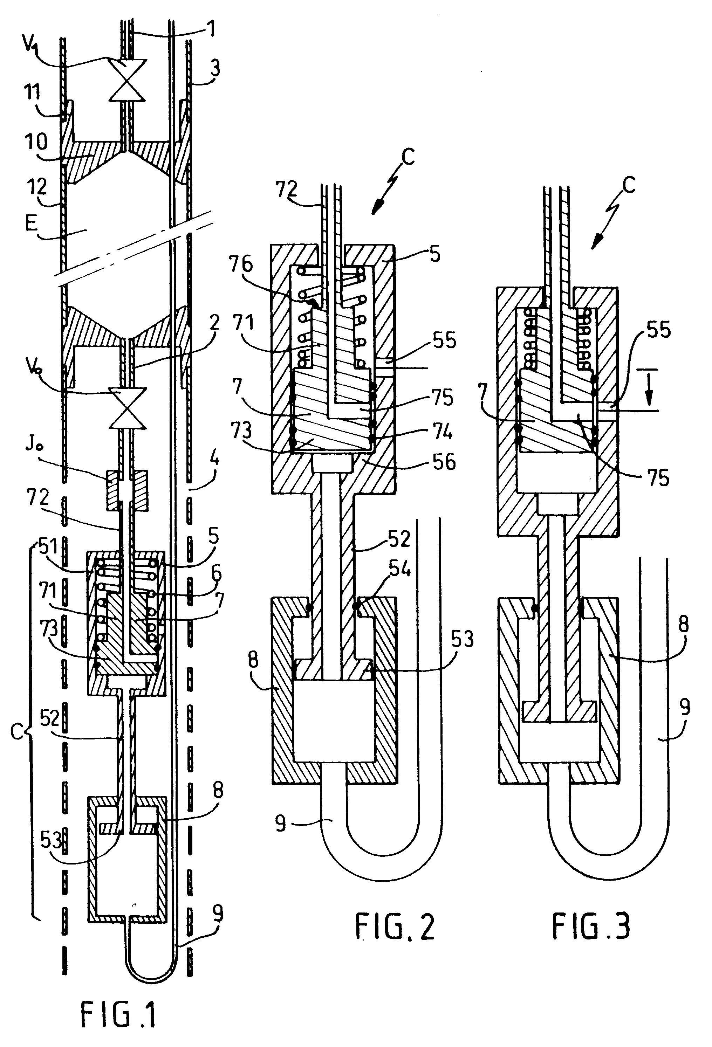

C'est un tel échantillonneur que montre en coupe axiale schématique la figure 1. Il est en outre disposé sur le dessin dans sa position verticale de fonctionnement. C'est ainsi que nous y distinguons essentiellement une bouteille E d'échantillonnage supérieure et une tête de commande C disposée de façon caractéristique immédiatement en dessous de la bouteille E pour en contrôler l'entrée. Plus précisément pour ce qui est de la bouteille E, il s'agit en fait d'un long cylindre 12 dont une bonne partie centrale n'est pas représentée. Un exemple avantageux de ses dimensions serait en effet environ 1,3 m de longueur contre 4 cm de diamètre, soit une contenance d'à peu près 1,5l. Ses deux extrémités 10, parfaitement identiques, comportent chacune un orifice axial d'où saille extérieurement un tube creux. Une vanne $V_1$, indiquée sur la figure 1 par le symbole employé traditionnellement dans les schémas hydrauliques, est disposée sur le tube 1 supérieur et une autre $V_0$ sur le tube 2 inférieur. Ce sont par exemple des vannes manuelles tout ou rien.

La bouteille E d'échantillonnage qui vient d'être décrite est montée au sein de l'échantillonneur grâce tout d'abord à un manchon de jonction Jo qui assure la communication étanche de l'extrémité du tube 2 inférieur avec une tige 72 creuse de la tête de commande C. Ensuite, une enveloppe protectrice 3 est prévue pour être adaptée aux deux extrémités 10 de la bouteille E d'échantillonnage (par emboîtement à force ou par vissage sur par exemple une couronne 11 saillant extérieurement) et se prolonger tout autour de la tête de commande C. En regard de cette dernière toutefois, l'enveloppe 3, qui est nettement plus large que la tête, est en outre munie de claires-voies 4. Ces dernières sont suffisamment grandes pour permettre la bonne transmission à la tête de commande C de la pression hydrostatique de l'eau souterraine régnant au point de prélèvement.

Il se trouve en effet que l'entrée de l'eau au sein de la bouteille s'effectue au niveau de cette tête. Pour cela, elle se compose de deux groupes cylindre-piston disposés l'un au-dessus de l'autre et prévus pour fonctionner de façon dépendante. Le groupe inférieur, que nous appellerons ici "groupe moteur", comprend un cylindre 8 fixe. A une de ses extrémités, il communique avec une conduite 9 d'amenée d'un fluide moteur. De façon caractéristique, la conduite 9, qui se prolonge jusqu'en surface, prend place au sein de l'enveloppe 3 protectrice. Pour cela, elle s'étend parallèlement à la tête de commande C. C'est ainsi qu'au niveau de la bouteille d'échantillonnage E, la conduite 9 traverse cette dernière. De l'autre extrémité du cylindre 8 émerge une tige 52 creuse solidaire d'un piston 53 circulant dans le cylindre 8 fixe. Si l'étanchéité au niveau du piston 53 n'est pas recherchée (le piston 53, qui fait plutôt office de guide, est par exemple une simple rondelle en cuivre), elle est garantie au passage de la tige 52 par notamment au moins un joint torique 54.

Nous avons choisi d'appeler le groupe cylindre-piston supérieur "groupe valve". Il contrôle en effet directement l'entrée de la bouteille E d'échantillonnage, qui intervient par un orifice 55 latéral de son cylindre 5. Pour cela, ce dernier est à la vérité solidaire du piston 53 venant d'être mentionné. Il s'ensuit tout d'abord qu'il est mobile. Comme ensuite, il est disposé dans le prolongement de la tige 52 creuse qui communique avec l'une de ses extrémités, le fluide moteur peut y pénétrer. Cela est favorisé par un épaulement 56 intérieur du cylindre 5 qui maintient un écart avec un piston 73 circulant dans le cylindre 5 mobile. Ce piston 73 est de son côté prévu pour être fixe. Sa tige 72 ressort du cylindre 5 par son extrémité opposée à celle communiquant avec la tige 52. Remarquons qu'aucune précaution particulière n'est prise pour rendre étanche le passage de la tige 72 hors du cylindre 5. Il est alors caractéristique que cette tige creuse 72 soit justement celle déjà évoquée se raccordant au tube 2 inférieur de la bouteille E par l'intermédiaire du manchon de jonction Jo.

L'ensemble piston 7 ainsi formé présente de surcroît deux particularités. Entre le piston 73 proprement dit et la tige 72 s'étend une partie cylindrique de diamètre intermédiaire. C'est un centreur 71 pour un ressort 6 cylindrique entourant l'ensemble piston 7. L'épaulement 76 que ce centreur 71 détermine avec la tige 72 plus mince sert par ailleurs de butée pour la fin de course du cylindre 5 mobile. Enfin le canal intérieur de la tige 72 creuse se prolonge à l'intérieur de l'ensemble piston 7. Axial au sein du centreur 71, ce canal est dévié radialement dans le piston 73 proprement dit. Son embouchure 75 se situe dès lors à la surface du piston 73 circulant dans le cylindre 5. Au moins deux segments 74 prennent place de part et d'autre de l'embouchure 75. Pour plus de sécurité, le doublement de chacun des deux segments 74, comme cela est représenté sur les figures 2 et 3, est préféré. Ce sont avantageusement des joints toriques sur l'emplacement respectif desquels nous allons revenir.

Les figures 2 et 3, qui sont des vues agrandies de la tête de commande C de la figure 1, permettent en effet de mieux comprendre comment collaborent les groupes cylindre-piston précédemment décrits. La figure 3 les montre en effet dans une position relative telle que l'eau souterraine peut entrer dans la bouteille E d'échantillonnage qui est donc ouverte. Cela est garanti par la coïncidence de l'orifice 55 du cylindre 5 et de l'embouchure 75 du canal intérieur de l'ensemble piston 7. Nous notons qu'alors, les joints toriques 74 situés de chaque côté du canal assurent l'isolation de l'intérieur du cylindre 5 vis-à-vis de l'eau autour de la tête. Sur la figure 2 au contraire, il n'y a plus coïncidence si bien que la bouteille E est fermée.

L'orifice 55 communique alors avec l'intérieur du cylindre 5 situé derrière le piston 73, tous les joints 74 se retrouvant du même côté de l'orifice 55.

Le passage entre ces deux positions s'obtient en injectant un fluide moteur par la conduite 9. C'est par exemple de l'air ou de l'azote comprimés. Il envahit alors l'intégralité du cylindre 8 (y compris derrière le piston 53), puis conditionne l'augmentation de la pression sur le piston 73. Celle-ci doit toutefois être suffisante pour vaincre non seulement l'effort de rappel exercé par le ressort 6, mais aussi la pression hydrostatique qui s'est établie de l'autre côté du piston 73, l'eau souterraine ayant pu pénétrer dans le cylindre 5 au niveau du passage de la tige 72. Ainsi le cylindre 5 se translate-t-il autour de l'ensemble piston 7 jusqu'à ce qu'il y ait butée contre l'épaulement 76. La longueur du centreur 71 est alors calculée pour que soit immanquablement réalisée la coïncidence selon la figure 3. Dès que la pression du fluide moteur chute, par exemple à la valeur de la pression hydrostatique, le ressort 6 ramène le cylindre 5 contre l'ensemble piston 7 au niveau de son épaulement 56 servant alors de butée. La position de fermeture de la bouteille E de la figure 2 est rétablie.

Un prélèvement avec l'échantillonneur dont nous venons de détailler la structure et le fonctionnement s'effectue de la façon suivante. Tout d'abord, la bouteille est montée dans l'échantillonneur. Sa vanne $V_1$ supérieure est alors fermée tandis que celle $V_0$ située du côté de la tête de commande est maintenue ouverte. Puis la bouteille d'échantillonnage est soigneusement mise sous vide. En outre, afin d'assurer la fiabilité de l'étude ultérieure des gaz dissous dans l'échantillon d'eau qu'elle doit recueillir, de l'hélium y est introduit, avantageusement à une pression proche de 10 bars (soit 1 MPa). A nouveau le vide y est rétabli. Au besoin, ce cycle mise sous pression d'hélium - établissement du vide est répété trois ou quatre fois.

Une fois in-situ, l'échantillonneur est descendu à la profondeur de prélèvement. Le fluide moteur est alors injecté par la conduite 9. Sa pression au fond est amenée à une valeur peu différente de la pression hydrostatique présumée régnér à la profondeur de prélèvement majorée d'environ 10 bars (soit 1 MPa). Cela met relativement brusquement la bouteille d'échantillonnage E en communication avec l'eau souterraine. Cette dernière y pénètre vivement. Pendant ce court laps de temps où elle subit une importante baisse de pression, elle connaît un dégazage transitoire. Cependant, les gaz qu'elle contient ont tendance à remonter si bien qu'ils se retrouvent piégés dans la bouteille disposée dans ce but au-dessus de son entrée.

Traditionnellement, la bouteille E est maintenue ouverte pendant au moins dix minutes. Il est admis qu'à l'issue de ce délai, la quantité d'eau occupant la bouteille E ainsi que le canal intérieur intéressant tant son tube 2 inférieur que l'ensemble piston 7 a retrouvé, en dépit du dégazage initial, une composition pratiquement identique à celle de l'eau environnante. La pression du fluide moteur est dès lors ramenée à une pression plus faible, en pratique la pression atmosphérique. Cela est effectué notamment en stoppant son injection depuis la surface et en mettant la conduite d'amenée 9 en communication avec l'atmosphère. Ensuite l'échantillonneur est remonté. Après la fermeture de la vanne $V_0$, la bouteille E est alors démontée.

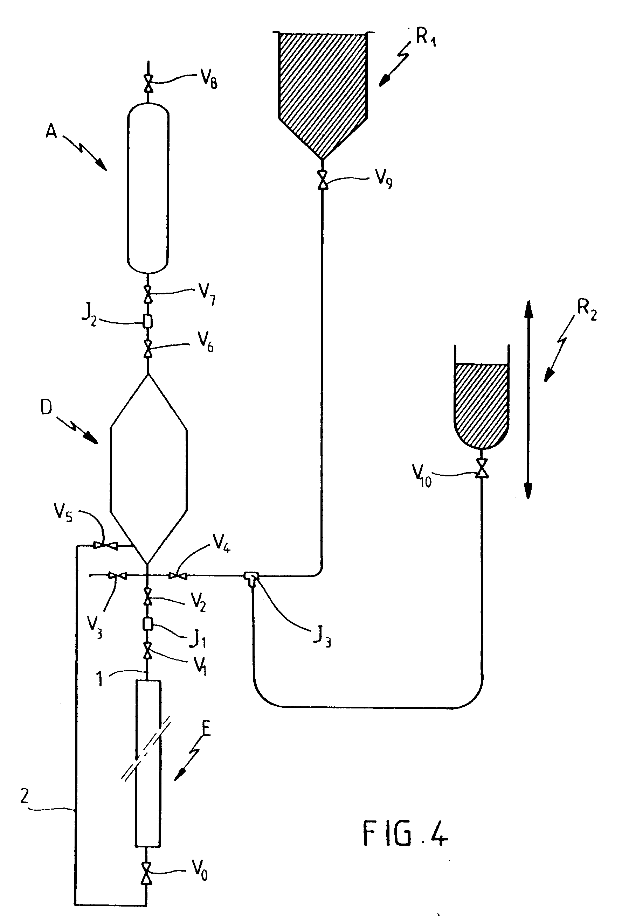

Cependant, avant de confier l'échantillon d'eau ainsi prélevé à un laboratoire chargé d'analyser ses gaz dissous, il convient de lui faire subir un conditionnement. Celui-ci a pour but essentiel de ramener l'eau recueillie dans la bouteille E depuis la pression hydrostatique de prélèvement à une pression peu différente de la pression atmosphérique. Il fait pour cela appel au montage de la figure 4.

C'est ainsi qu'interviennent cinq récipients disposés dans un plan vertical tel que représenté :

– la bouteille d'échantillonnage E (dont seules les deux extrémités sont visibles),

– un détendeur D, de préférence métallique afin de ne pas risquer d'éclater lors de sa mise en communication avec la bouteille E sous pression. Deux liaisons 1 et 2 (représentées, comme toutes les liaisons hydrauliques entre récipients du schéma de la figure 4, par de simples lignes) aboutissent dans ce but au fond du détendeur D, qui partent chacune d'une extrémité différente de la bouteille E,

– une ampoule A qui doit finalement recueillir la majeure partie des gaz dissous en vue de l'analyse de leur composition et qui est disposée en série avec le détendeur D,

la bouteille E se trouvant ainsi surmontée du détendeur D, puis de l'ampoule A,

– un réservoir $R_1$ tampon, contenant du mercure, pour notamment le remplissage initial du détendeur D et de l'ampoule A,

– un réservoir $R_2$ mobile, contenant également du mercure, pour l'évaluation de la quantité de gaz dissous comme il sera expliqué plus loin,

les deux derniers réservoirs étant reliés hydrauliquement à la liaison verticale 1 entre le détendeur D et l'extrémité supérieure de la bouteille E.

Des manchons de jonction Ji, similaires au manchon Jo intervenant dans l'échantillonneur précédent, sont en outre reportés pour mémoire sur la figure 4 entre chacun de ces cinq récipients. De même des vannes Vi sont indiquées schématiquement. Ce sont plutôt des vannes manuelles tout ou rien. Elles ont pour rôle de permettre à un opérateur de mener les opérations qui vont être à présent exposées sans avoir à démanteler le montage de la figure 4.

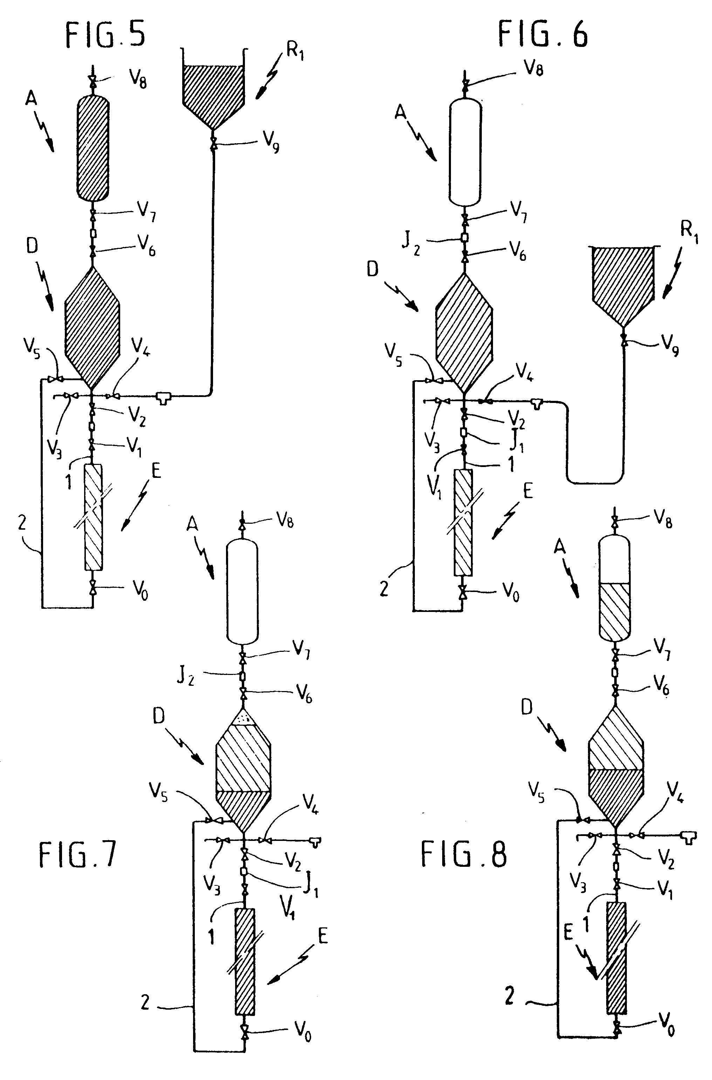

Les figures 5 et suivantes illustrent quelques unes des opérations élémentaires de conditionnement de l'échantillon. Afin d'en faciliter la compréhension, seuls les récipients, liaisons hydrauliques et vannes mises en cause par une opération particulière sont reportés sur la figure associée. Conformément à la remarque précédente à propos des vannes, il faut cependant concevoir que l'ensemble du montage de la figure 4 demeure. C'est qu'en vérité, les vannes gouvernant la communication avec le ou les récipients manquants sur la figure sont fermées.

Dès lors, quatre grandes étapes de conditionnement sont à distinguer:

1°) le détendeur D et l'ampoule A sont, dans une étape préliminaire, remplis de mercure. Pour cela, toutes les vannes du montage selon la figure 4 sont ouvertes à l'exception des vannes $V_0$ et $V_1$ qui isolent encore pour l'heure la bouteille E d'échantillonnage et de la vanne $V_3$ servant en fait de robinet de purge. Le mercure du réservoir $R_1$ tampon se répand alors par simple gravité dans le détendeur D, puis dans l'ampoule A et dans tous les tubes de liaison. Tandis qu'il pénètre par la base de ces récipients, l'air par exemple s'en échappe par leur sommet. Finalement est réalisée la situation représentée schématiquement sur la figure 5, les hachures symbolisant l'eau prélevée et l'ombré, le mercure. Le dispositif ne contient donc que l'eau prélevée et le mercure. Tout l'air en a été éliminé.

Toujours dans cette étape préliminaire, le vide est ensuite créé dans l'ampoule A dont la vanne $V_8$ supérieure a été tout d'abord refermée. L'opération élémentaire permettant d'y parvenir consiste avantageusement à faire descendre le réservoir $R_1$ tampon de sorte que le niveau de son mercure se situe à peu près à la hauteur de la vanne $V_6$ contrôlant le sommet du détendeur D. Etant donné la densité du mercure, la pratique montre que celui-ci se retire alors de l'ampoule A en dépit de la dépression s'y développant. Lorsqu'il en a totalement disparu, les vannes $V_6$ et $V_7$ sont à leur tour fermées. La figure 6 schématise l'état du montage qui est dès lors prêt pour le conditionnement proprement dit de l'échantillon.

2°) la détente de l'échantillon sous pression contenu dans la bouteille E a ensuite lieu. L'étape correspondante est elle aussi menée de préférence en deux opérations élémentaires. Tout d'abord, les vannes $V_1$ et $V_2$ ainsi que $V_0$ sont ouvertes de sorte que le mercure du détendeur descend (plutôt par la liaison 2) dans la bouteille E tandis que l'eau remonte (plutôt par la liaison 1). Le volume du détendeur D étant à peine plus grand que celui de la bouteille E, il s'ensuit une décompression de l'échantillon relativement restreinte. Cela peut cependant suffir pour qu'une partie des gaz reviennent déjà à l'état gazeux (cf. la zone tachetée au sommet du détendeur D sur la figure 7).

Puis les vannes $V_6$ et $V_7$ sont à leur tour ouvertes mettant ainsi le détendeur D et l'ampoule A en communication. Dès lors, le volume offert au total à l'échantillon est nettement plus important si bien que la décompression est plus marquée. Et c'est finalement une phase gazeuse bien développée qui se masse au sommet de l'ampoule A (cf. figure 8). En pratique, il est admis qu'elle contient la quasi-totalité des gaz dissous initialement dans l'échantillon.

Pour l'accroître encore, il est enfin possible d'ouvrir les vannes $V_4$ et $V_{10}$ et d'abaisser le réservoir mobile $R_2$, ce qui diminue la pression à l'interface mercure-phase liquide.

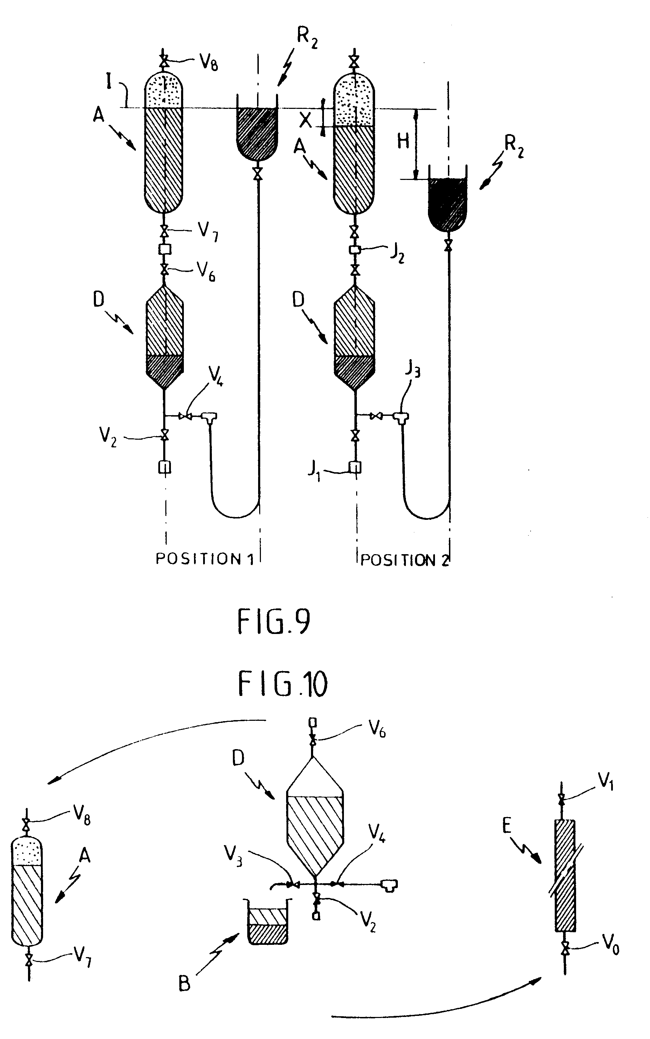

3°) C'est ce dernier effet qui est utilisé pour estimer la quantité des gaz dissous au cours de l'étape de mesure. Cette quantité est au demeurant plutôt approchée par leur volume v à la pression atmosphérique. Ce dernier se mesure en faisant prendre au réservoir mobile $R_2$ deux positions successives qui sont avantageusement choisies comme cela est illustré sur la figure 9. Il est alors donné par:

$$v = \frac{H - 0,0735 \, x}{760} \, \frac{v_1 \, v_2}{v_2 - v_1}$$

où les volumes v, $v_1$ et $v_2$ sont exprimés en cm3 et les hauteurs H et x, en mm.

Dans cette formule, $v_1$ est le volume de la phase gazeuse dans la position 1 du réservoir $R_2$ qui assure le même niveau l pour la surface du mercure dans ce dernier et l'interface gaz-liquide dans l'ampoule A. $v_2$ est, quant à lui, le volume de cette même phase gazeuse, mais pour une position 2 du réservoir $R_2$ dans laquelle la surface du mercure est descendue par rapport au niveau l précédent. H est justement la hauteur correspondant à cette descente tandis que x est la descente concomitante de l'interface gaz-liquide dans l'ampoule A.

4°) Après cette mesure, les vannes $V_0$ et $V_1$, $V_2$, $V_4$ et $V_6$ ainsi que $V_7$ sont fermées en vue d'éloigner du montage, d'un côté, la bouteille E à présent remplie de mercure et, d'un autre, l'ampoule A contenant les deux phases dissociées de l'échantillon. C'est cette dernière étape de démantèlement que la figure 10 cherche à illustrer.

Si, dès lors, l'ampoule A peut être livrée à un laboratoire en vue de l'analyse des gaz dissous (par chromatographie par exemple), il est par ailleurs possible de vidanger le détendeur en plaçant notamment un bécher B sous la vanne $V_3$ de purge et en ouvrant cette dernière (de même que la vanne $V_6$ pour la mise à l'air). L'eau liquide ainsi récupérée peut le cas échéant permettre un bilan des sels en solution dans l'échantillon.

Dans le cadre d'une autre utilisation du présent dispositif visant à l'étude de la flore bactérienne de l'échantillon prélevé, il n'est pas nécessaire de recourir à un ensemble de laboratoire aussi important que celui détaillé ci-dessus. Il suffit en effet de relier une des extrémités de la bouteille E à un flacon, par exemple en verre comportant supérieurement un évent. L'échantillon se trouve de la sorte décomprimé lors de son transvasement dans le flacon. Cependant différentes précautions sont dans ce cas à observer pour ce qui est de la stérilité tant du flacon que de l'échantillonneur (bouteille E et tête C de commande). Leur stérilisation étant avantageusement obtenue en les soumettant à une température élevée (par exemple à peu près 140°C), ces éléments sont fabriqués en matériaux capables de supporter ce traitement. Cela vaut pour les corps de la bouteille E et de la tête C qui sont par exemple réalisés en acier inoxydable ainsi que pour l'élastomère constituant les joints d'étanchéité, 54 et 74 notamment.

## Revendications

1.- Dispositif de prélèvement et de conditionnement d'un échantillon d'eau souterraine en vue de déterminer notamment la quantité de gaz dissous que l'échantillon contient, le dispositif comprenant un échantillonneur pour recueillir l'échantillon dans une bouteille d'échantillonnage (E) de contenance invariable démontable et à la pression hydrostatique du point de prélèvement ainsi qu'un ensemble de laboratoire pour détendre l'échantillon dans un détendeur (D) et isoler dans une ampoule (A) la majeure partie de ses gaz dissous, l'échantillonneur comportant, disposée sous la bouteille (E), une tête de commande (C) adaptée à contrôler l'entrée de la bouteille (E) sous l'action d'un fluide sous pression, le fluide étant amené depuis la surface tandis qu'une conduite (9) d'amenée du fluide passe au travers de la bouteille (E).

2.- Dispositif selon la revendication 1, caractérisé en ce que le fluide pour actionner la tête de commande (C) est pris dans l'ensemble des fluides constitué de l'air et de l'azote de sorte que la commande est pneumatique.

3.- Dispositif selon la revendication 2, caractérisé en ce que la tête de commande (C) se compose de deux groupes cylindre-piston disposés l'un en dessous de l'autre,
   – un premier groupe cylindre-piston, dit "moteur", ayant un cylindre (8) fixe à l'extrémité inférieure duquel se raccorde la conduite (9) d'amenée du fluide tandis que, de son extrémité supérieure, émerge dans des conditions étanches une tige (52) creuse solidaire d'un piston (53) adapté à circuler dans le cylindre (8) fixe,
   – un second groupe cylindre-piston, dit "valve", ayant un cylindre (5) mobile, solidaire à son extrémité inférieure de la tige (52) creuse émergeant du groupe "moteur", et recevant intérieurement un ensemble piston (7), l'ensemble piston (7) comprenant une tige (72) creuse qui émerge de l'extrémité supérieure du cylindre (5) mobile pour se raccorder rigidement à la bouteille (E) et communiquer avec elle par un canal intérieur, l'ensemble piston (7) comprenant en outre un piston (73) au sein duquel se prolonge et est dévié le canal intérieur de la tige (72) creuse pour présenter une embouchure (75) latérale, le piston (73) étant adapté à circuler de façon étanche relativement au cylindre (5) mobile à l'encontre de moyens élastiques (6) de rappel entre une position "ouverte" où l'embouchure (75) latérale est en regard d'un orifice (55) du cylindre (5) mobile de sorte que l'entrée de l'eau souterraine dans la bouteille (E) est autorisée et une position "fermée" où l'embouchure (75) latérale n'est pas en regard de l'orifice (55) de sorte que la bouteille demeure fermée.

4.- Dispositif selon la revendication 3, caractérisé en ce que le cylindre (5) mobile comporte intérieurement à son extrémité inférieure des moyens (56) de butée pourw le piston (73) déterminant sa position "fermée".

5.- Dispositif selon la revendication 3 ou la revendication 4, caractérisé en ce que les moyens élastiques (6) sont constitués par un ressort cylindrique et en ce que l'ensemble piston (7) du groupe "valve" présente, entre sa tige (72) creuse et son piston (73), un centreur (71 ) pour le ressort de diamètre intermédiaire par rapport à ceux de la tige (72) et du piston (73) de sorte qu'un épaulement (76) est défini, la mise en butée du centreur (71) sur le cylindre (5) mobile au niveau de l'épaulement (76) déterminant par ailleurs la position "ouverte" du piston (73).

6.- Dispositif selon l'une quelconque des revendications 3 à 5, caractérisé en ce que le piston (73) circule de façon étanche relativement au cylindre (5) mobile grâce à au moins deux joints toriques (74) disposés autour du piston (73) de part et d'autre de l'embouchure (75) latérale du canal intérieur de l'ensemble piston (7).

7.- Dispositif selon l'une quelconque des revendications 1 à 6, caractérisé en ce que la bouteille d'échantillonnage (E) est cylindrique et présente une extrémité (10) supérieure et une extrémité inférieure, les deux extrémités étant distantes d'une hauteur de l'ordre du mètre tandis que le diamètre de la bouteille (E) est de l'ordre de quelques centimètres.

8.- Dispositif selon la revendication 7, caractérisé en ce qu'un tube creux (1, 2) muni d'une vanne ($V_0$, $V_1$) tout ou rien émerge de chacune des extrémités (10) de la bouteille (E), la tête de commande (C) étant raccordée rigidement au tube (2) émergeant de son extrémité inférieure par l'intermédiaire d'un manchon de jonction ($J_0$).

9.- Dispositif selon la revendication 7 ou la revendication 8, caractérisé en ce qu'une enveloppe (3) protectrice est raccordée à chaque extrémité (10) de la bouteille d'échantillonnage (E) et se prolonge autour de la tête de commande (C) ; et en ce qu'au niveau de la tête (C), l'enveloppe (3) est percée de claires-voies (4) adaptées à la transmission de la pression hydrostatique au point de prélèvement, la conduite (9) d'amenée du fluide passant entre la tête (C) et l'enveloppe (3).

**10.-** Dispositif selon la revendications 9, caractérisé en ce que l'enveloppe (3) est également cylindrique, son diamètre étant au plus égal à celui de la bouteille (E).

**11.-** Dispositif selon l'une quelconque des revendications 1 à 10, caractérisé en ce que l'ensemble de laboratoire comporte, outre

– le détendeur (D) ayant une base et un sommet,

– et l'ampoule (A) disposée au-dessus du détendeur (D) et communiquant avec le sommet de ce dernier,

– un réservoir ($R_1$) tampon de mercure communiquant avec la base du détendeur (D) et disposé de sorte qu'il permet le remplissage préalable du détendeur (D) et de l'ampoule (A),

– ainsi qu'un réservoir ($R_2$) mobile de mercure communiquant également avec la base du détendeur (D),

l'ensemble recevant la bouteille d'échantillonnage (E) sous le détendeur (D) de façon que les extrémités (10) supérieure et inférieure de la bouteille (F) communiquent chacune par une liaison hydraulique (1, 2) différente avec la base du détendeur (D).

**12.-** Dispositif selon la revendication 11, caractérisé en ce que des moyens de jonction (Ji) ainsi que des vannes (Vi) sont prévus pour assurer notamment la démontabilité du détendeur (D), de l'ampoule (A), des réservoirs ($R_1$, $R_2$) de mercure et de la bouteille d'échantillonnage (E).

**13.-** Procédé de prélèvement et de conditionnement d'un échantillon d'eau souterraine en vue de déterminer notamment la quantité de gaz dissous que l'échantillon contient, caractérisé en ce qu'il consiste à mettre en oeuvre un dispositif selon l'une quelconque des revendications précédentes tout d'abord en :

– créant le vide dans la bouteille d'échantillonnage (E),

– descendant l'échantillonneur à la profondeur de prélèvement, puis actionnant la tête de commande (C) par l'injection de fluide sous pression pour autoriser l'entrée de l'eau souterraine dans la bouteille (E) au moins pendant environ 10 mn,

– cessant l'injection de fluide sous pression et purgeant la conduite (9) d'amenée du fluide de sorte que la tête de commande (C) referme la bouteille (E), puis remontant l'échantillonneur et démontant la bouteille (E).

**14.-** Procédé selon la revendication 13, caractérisé en ce que l'étape de création du vide dans la bouteille (E) comporte les opérations élémentaires suivantes :

(i) mise sous vide,

(ii) injection d'hélium sous environ 10 bars,

(iii) mise sous vide,

la séquence d'opérations (ii) suivie de (iii) étant répétée au moins trois fois.

**15.-** Procédé selon la revendication 13 ou la revendication 14, caractérisé en ce qu'il consiste ensuite à utiliser l'ensemble de laboratoire, le détendeur (D) étant préalablement rempli de mercure et l'ampoule (A) mise sous vide, la bouteille (E), le détendeur (D) et l'ampoule (A) étant disposés tous trois en série l'un au-dessus de l'autre de façon à permettre, dans un premier temps, le transvasement de l'échantillon dans le détendeur (D), puis, dans un second temps, la détente dans l'ampoule (A) de l'échantillon transvasé dans le détendeur (D) de sorte qu'une phase gazeuse s'y développe constituée des gaz initialement dissous dans l'échantillon et dont la solubilité est réduite par suite de la baisse de pression.

**16.-** Procédé selon la revendication 15, caractérisé en ce qu'un réservoir ($R_2$) mobile de mercure est finalement mis en communication avec la base du détendeur (D) afin de mesurer le volume à la pression atmosphérique de la phase gazeuse contenue dans l'ampoule.

**17.-** Procédé selon la revendication 16, caractérisé en ce que la mesure est effectuée en faisant prendre au réservoir ($R_2$) mobile deux positions correspondant chacune à une hauteur relative différente de la surface du mercure par rapport à l'interface du liquide avec la phase gazeuse dans l'ampoule.

**18.-** Procédé selon la revendication 17, caractérisé en ce qu'une des hauteurs relatives est nulle.

**19.-** Procédé selon l'une quelconque des revendications 13 à 18, caractérisé en ce qu'il consiste enfin à analyser la composition des gaz dissous isolés dans l'ampoule (A).

**20.-** Procédé selon la revendication 19, caractérisé en ce que l'analyse de la composition des gaz dissous est effectuée par chromatographie.

**21.-** Utilisation d'un dispositif selon l'une quelconque des revendications 1 à 10, caractérisée en ce que l'échantillonneur est préalablement stérilisé, en ce qu'il est utilisé pour prélever un échantillon à une profondeur donnée, et en ce que, l'ensemble de laboratoire se limitant à un flacon stérile muni supérieurement d'un évent, l'échantillon prélevé est finalement transféré dans le flacon de sorte qu'une étude représentative de la flore bactérienne de l'eau souterraine à la profondeur de prélèvement est envisageable.

**22.-** Utilisation selon la revendication 21, caractérisée en ce que la stérilisation est réalisée à haute température, l'échantillonneur étant constitué de matériaux adaptés à supporter ce traitement.

FIG.1

FIG.2

FIG.3

FIG.4

FIG.5

FIG.6

FIG.7

FIG.8

FIG.9

FIG.10

Office européen
des brevets

**RAPPORT DE RECHERCHE EUROPEENNE**

Numero de la demande

EP   92 40 0107

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | OIL AND GAS JOURNAL. vol. 33, 16 Mai 1935, TULSA US pages 69 – 73; R.J. SCHILTHUIS: 'Technique of Securing and Examining Sub-surface Samples of Oil and Gas' * page 69 - page 72 * --- | 1,7,11, 13,15 | G01N1/12 E21B49/08 |
| A | US-A-3 957 117 (C.R. DALE) * colonne 2, ligne 38 - colonne 5, ligne 39 * --- | 1-4,7,13 | |
| A | US-A-4 811 599 (R.L. JOHNSON ET AL.) * le document en entier * --- | 1,2,7,8, 13 | |
| A | US-A-3 379 065 (H.A. GIBBON) * colonne 1, ligne 29 - colonne 2, ligne 20 * * colonne 11, ligne 11 - colonne 13, ligne 2 * --- | 1,21 | |
| A | FR-A-2 593 921 (GEOSERVICES) * page 7, ligne 20 - page 9, ligne 40 * --- | 1,11,15 | |
| A | GB-A-1 550 335 (EXPLORATION AND PRODUCTION SERVICES NORTH SEA) * le document en entier * --- | 1,11,15 | **DOMAINES TECHNIQUES RECHERCHES (Int. Cl.5)** |
| A | US-A-2 254 006 (P.G. EXLINE) * page 3, colonne de droite, ligne 28 - page 4, colonne de gauche, ligne 53 * --- | 1,11,15 | G01N E02D E21B |
| A | US-A-4 903 765 (G.D. ZUNKEL) * colonne 8, ligne 30 - colonne 10, ligne 5 * ----- | 1,3,4,6 | |

Le présent rapport a été établi pour toutes les revendications

| Lieu de la recherche | Date d'achèvement de la recherche | Examinateur |
|---|---|---|
| LA HAYE | 29 AVRIL 1992 | BINDON C.A. |